# EUROPEAN PATENT SPECIFICATION

(11) **EP 1 438 869 B1**
(45) Date of publication and mention of the grant of the patent: **18.03.2009**
(21) Application number: 02770021.0
(22) Date of filing: 25.10.2002
(51) Int. Cl.: H04W 8/26

(54) **ROAMING ARRANGEMENT**
ROAMING-ANORDNUNG
ARRANGEMENT D'ITINERANCE

(30) Priority: 26.10.2001 WO PCT/EP01/12455; 11.01.2002 FI 20020057
(43) Date of publication of application: 21.07.2004
(73) Proprietor: Nokia Corporation, 02150 Espoo (FI)
(72) Inventor: HAVERINEN, Henry, FIN-33720 Tampere (FI); AHMAVAARA, Kalle, FIN-00530 Helsinki (FI)
(74) Representative: Kaukonen, Juha Veikko
(86) International application number: PCT/FI2002/000835
(87) International publication number: WO 2003/037023

(56) References cited:
- WO-A1-00/79814
- WO-A2-01/95657
- GB-A- 2 315 193
- US-A1- 2001 024 953
- ALA-LAURILA J. ET AL.: 'Wireless lan access network architecture for mobile operators' IEEE COMMUNICATIONS MAGAZINE vol. 39, no. 11, November 2001, pages 82 - 89, XP001107810
- BOSTROM T. ET AL.: 'Ericsson mobile operator wlan solution' ERICSSON REVIEW vol. 79, no. 1, April 2002, pages 36 - 43, XP001116090

## Description

### BACKGROUND OF THE INVENTION

The invention relates to arranging roaming in a telecommunications system comprising a wireless local access network and a public land mobile network (PLMN).

There has been considerable development in recent years in data services provided for mobility-enhancing PLMNs with large coverage areas. The general packet radio service (GPRS) provides GSM networks with efficient data transmission, where radio capacity is only reserved during transfer of packets. A 3G universal mobile telecommunications system (UMTS), standardized by 3GPP (Third Generation Partnership Project), will provide even higher data transmission capacity than GSM/GPRS networks. A radio interface provided by a UMTS terrestrial radio access network (UTRAN) is based on enhanced WCDMA (Wideband Code Division Multiple Access) technology, and a core network is based on the GSM/GPRS core network.

In addition to data services provided by PLMNs, various wireless local area networks have been developed to provide wideband wireless data transmission from a very limited coverage area. An example of such technology is a wireless local area network (WLAN) based on IEEE 802.11. These local networks provide high-speed data transmission and access to the Internet in different hot spots, such as offices or airports. There has also been some convergence of local area networks and PLMNs. For example GSM-based base stations can be used in an office data system to provide a wireless connection to the local area network of the office. On the other hand, WLANs have also been provided with network elements, with which the WLAN can utilize a PLMN. For example WLANs according to the IEEE 802.11 standard, and GSM networks have been provided with network elements for accessing GSM authentication and billing services via a WLAN.

Roaming can also be arranged in a WLAN, i.e. a user can be authenticated in the local network where he is roaming (and with which he typically has no service contract made in advance) by means of the PLMN, a subscriber identification module (in the GSM a subscriber identity module SIM) provided by the home PLMN (HPLMN), and subscriber data located in the subscriber's home network. However, a mobile station can also be located for example abroad in the area of a local network with no direct connection to the subscriber's HPLMN but only to one or more networks of other PLMN operators. In order to provide successful roaming in such a situation, PLMN operators must have mutual roaming agreements determining how a roaming subscriber is to be charged. When a roaming mobile station contacts a local network, it is not necessarily aware of the PLMNs that are available via the local network in question. In such a case, the mobile station must provide the local network with the network identifier (PLMN ID) of its HPLMN operator. Based thereon, the local network should select the PLMN that the roaming user should use. For this purpose, the local network should store data about the PLMNs where the user can roam, and preferably also data on the preferred PLMNs. This would require additional functionality and increase the need for memory capacity in the local network, and it might also cause conflicts of interest between the PLMN operators and the operators of local area networks.

GB 2315193 relates to network selection in a PLMN system divided into a public network portion and a private network portion. The private network portion has its own private PLMN code which is transmitted in the private network portion. The private subscriber mobile stations have the private PLMN code stored in their SIM. The MSC can receive service request originating both from private subscriber and public subscriber mobile stations. The network selection in a public mobile station is arranged such that a mobile station for the public network portion is not allowed to register to the private network, whereas a private mobile station may register both to private network portion and the public network portion (if outside the coverage of a private cell).

WO 00/79814 relates to mobility between IP telephone networks and cellular networks. When a subscriber terminal changes between an IP telephone network and a cellular network, subscriber identification and location information may be exchanged between these networks via a gateway, such that the current location information is updated to a home register of the subscriber.

### BRIEF DESCRIPTION OF THE INVENTION

An objective of the invention is to provide an improved arrangement for implementing roaming in local networks, which provide access to PLMNs. The objectives of the invention are achieved by a method, a telecommunications system and a wireless terminal equipment which are characterized by what is disclosed in the independent claims. The preferred embodiments of the invention are disclosed in the dependent claims.

According to the basic idea of the invention, PLMN identifiers and network element identifiers linked therewith are determined in a system and transmitted to a terminal equipment. PLMN selection is performed by means of a comparison of the received PLMN identifiers and PLMN identifiers stored in the terminal equipment. The terminal equipment is provided access, via a local network, to a network element defined by a network element identifier linked with the identifier of the selected PLMN.

A local network is typically either a wireless local area network (WLAN) or a wired local area network (LAN) operating on a non-licensed frequency range, but the scope of application of the invention is not restricted thereto, however.

An advantage of the arrangement according to the invention is that the network can be selected in the mobile station according to the preferences set by the user and/or the HPLMN operator. Therefore, the local network does not require data about roaming agreements between different PLMN operators, nor is it necessary to provide local networks with functionality implementing network selection. Thus, the interests of users, local network operators and PLMN operators can be satisfied through network selection carried out by the mobile station, and by using the PLMN identifiers the mobile station contains. The mobile station can utilize arrangements that are similar to the network selection methods used in existing PLMNs.

According to a preferred embodiment of the invention, a PLMN network element indicated by an identifier is an authentication server. The authentication server defined by the network element identifier linked with the identifier of the selected PLMN thus performs the authentication between each user and the PLMN. Data transmission services can be provided in a local network and/or a PLMN where the mobile station is roaming if successful authentication has taken place between the mobile station and the selected PLMN. Therefore highly functional and highly reliable PLMN authentication methods can also be applied on roaming users in local networks. A user does not necessarily have to have a subscription with a local network operator, but he may also be able to use local network services by means of a subscriber identification module provided by the UMTS operator, for example. According to another embodiment, billing data about the telecommunication services the mobile station has used is transmitted from the local network to the PLMN billing system, provided that the mobile station has been successfully authenticated. The roaming mobile station can thus also be charged via the HPLMN operator.

### BRIEF DESCRIPTION OF THE FIGURES

The invention will be described in more detail below in connection with the preferred embodiments and with reference to the accompanying drawings, in which
Figure 1a shows a telecommunications system comprising a PLMN and a local network;
Figure 1b illustrates the structure of a mobile station;
Figure 2 is a flowchart illustrating a method according to a preferred embodiment of the invention; and
Figure 3 is a signalling chart illustrating an authentication process according to a preferred embodiment of the invention.

### DETAILED DESCRIPTION OF A PREFERRED EMBODIMENT OF THE INVENTION

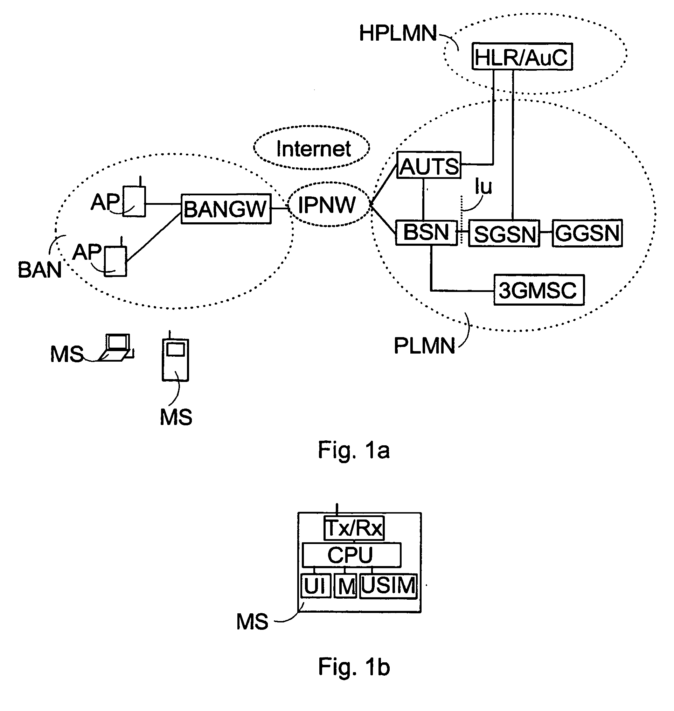

Reference is made to Figure 1a, which illustrates a network architecture according to a preferred embodiment comprising a public land mobile network PLMN, or in this case a UMTS network, and a local network, in Figure 1a a broadband access network BAN. According to a preferred embodiment, the local network BAN is a wireless local area network employing user authentication and access control according to IEEE 802.1x standard, for example a WLAN according to IEEE 802.11i. However, the invention can also be applied in other IEEE 802-based WLANs or other types of local networks BAN typically operating on a non-licensed frequency band, such as a broadband radio access network (BRAN) or a Bluetooth network. BRAN standards include type 1 and type 2 HIPERLAN (High Performance Radio Local Area Network) standards, and HIPERACCESS and HIPERLINK standards. A public land mobile network can be for example a GSM/GPRS network instead of a UMTS network.

The local network BAN and the UMTS network PLMN can communicate over an IP-based (Internet Protocol) network (IPNW). The UMTS network PLMN can comprise a UMTS terrestrial radio access network UTRAN and/or a UMTS core network CN, or at least some functionalities thereof. As shown in Figure 1a, the local network BAN can operate as one of UMTS access networks, and it can also provide access to other networks, such as the public Internet. The BAN comprises access elements called access points AP, which provide a mobile station MS with radio access and thus terminate the broadband radio connection.

The access point AP controls the L2 radio interface according to the applied radio technology, which means the IEEE 802.11 standard according to a preferred embodiment. The IEEE 802.11 specifications determine both physical level and MAC level protocols for data transmission over the radio interface. The data transmission can utilize either infrared or two spread spectrum techniques (Direct Sequence Spread Spectrum DSSS, Frequency Hopped Spread Spectrum FHSS). Both spread spectrum techniques utilize a 2.4 GHz band. The MAC layer utilizes a CSMA/CA (Carrier Sense Multiple Access with Collision Avoidance) technique. The AP also manages bridging of data streams at the radio interface or routing thereof to and from other network nodes.

As shown in Figure 1a, the local network BAN also comprises a control element or a gateway element BANGW (BAN Gateway). The BANGW operates as a gateway in data transmission between the AP and the UMTS network PLMN. These functions can be carried out in one or more logical or physical nodes, which can also be referred to by some other name than the BAN gateway, for example an access controller. The BANGW also allocates IP addresses to the mobile station MS and stores and delivers network information related to the UMTS network PLMN to the mobile stations MS requiring such information. The BANGW also receives and stores data about other networks that can be accessed via the BANGW, at least about the UMTS network PLMN. The BANGW forms charging information based on the data to be transmitted, and forwards it to the billing server for example according to an AAA (Authentication, Authorization and Accounting) protocol.

According to an alternative embodiment, either all or some of the BANGW functionality can be implemented in an access point AP. For example, an AP supporting user authentication and access monitoring according to IEEE 802.1x standard typically utilizes the AAA protocol and can thus communicate directly with authentication and accounting servers and also form the charging information based on the amount of transferred data or durations of connections.

The UMTS core network CN comprises a serving GPRS support node SGSN serving the mobile stations connected to the UMTS network, and a gateway GPRS support node GGSN, which provides a gateway function to external networks, such as the Internet or a company intranet. The PLMN can also comprise a mobile services switching centre 3GMSC providing circuit-switched services, and other network elements known per we, such as a short message service centre SMSC and elements of the UMTS charging system, which are not shown in Figure 1 a.

The UMTS network PLMN comprises an authentication server AUTS, which provides local networks BAN with services for authenticating UMTS mobile subscribers and preferably also with charging services. Therefore UMTS network subscriber data and authentication services can be used to serve mobile stations MS roaming in the local network BAN and comprising a universal subscriber identity module USIM. A mobile station MS user does not necessarily have to have a contract made in advance with the local network BAN operator. In such a case an MS can be charged for the wireless connection provided by the local network BAN later on via the PLMN. The UMTS network PLMN operator can later reimburse the BAN operator for the use of the network. Even though the authentication server is shown as a separate element in Figure 1a, it can be implemented for example as a part of a service node BSN, the SGSN or the GGSN.

If the PLMN is not the home network HPLMN of the mobile station MS, i.e. the mobile station is roaming in the PLMN, the roamed network must communicate with the HPLMN according to an international mobile subscriber identity IMSI indicated by a universal subscriber identity module USIM of the mobile station MS for purposes of authentication and charging. The HPLMN comprises a home location register HLR containing the subscriber data, and typically also an authentication centre AuC calculating authentication vectors. Figure 1 a does not show any other HPLMN elements, such as the 3GMSC or the SGSN, via which the connection to the HLR/AuC is typically set up. The UMTS specifications also refer to the roamed network as a serving network (SN) and to the HPLMN as merely a home network (HN).

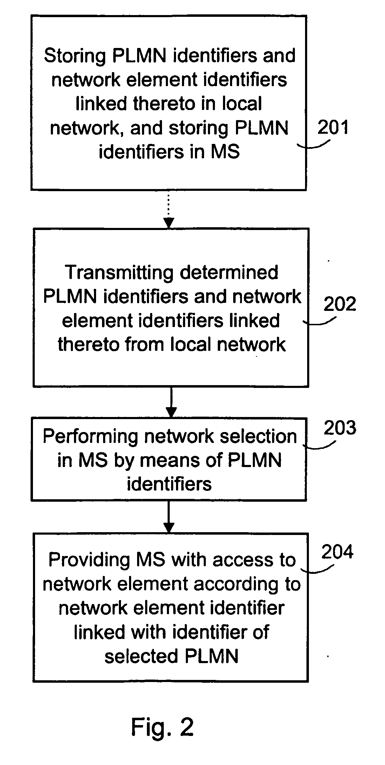

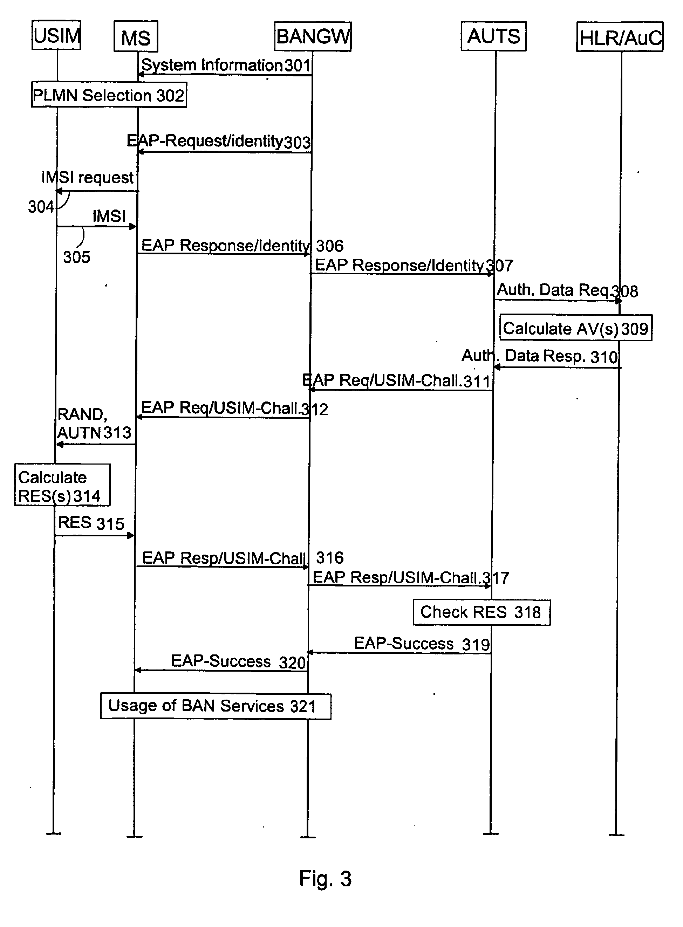

As shown in Figure 1b, the mobile station MS comprises a memory M, a user interface UI, a transceiver TxRx for implementing wireless data transmission, and a central processing unit CPU comprising one or more processors. The memory M comprises a non-volatile section for storing applications controlling the CPU and other data to be maintained, and a volatile section for temporary data processing. Computer program codes executed in the CPU can be used to make the MS implement the means according to the invention, some embodiments of which are illustrated in Figures 2 and 3. A computer program can be stored on any memory means, such as a PC hard disk or a CD-ROM, from which it can be loaded into the memory M of the MS executing the program. A computer program can also be loaded via the network for example by means of a TCP/IP protocol stack. It is also possible to use hardware arrangements or a combination of hardware and software to implement the means according to the invention. The MS can be for example an integrated communication device, a laptop computer combined with equipment providing radio access (e.g. a WLAN card), or a combination of a PDA and a mobile phone.

A mobile station MS according to a preferred embodiment comprises a UMTS-specific universal subscriber identity module USIM. The identity module used in the MS can be different in different mobile networks, for example GSM networks apply subscriber identity modules (SIM). By means of card-reading elements comprised by the MS (not shown in the figures), the CPU can utilize a universal integrated circuit card (UICC), including the USIM, according to the 3GPP specifications. A UICC can be changed from one MS to another. A USIM has been given by the HPLMN operator, and the HLR of the home network HPLMN stores data on the USIM. The USIM contains an international mobile subscriber identifier IMSI, which represents the subscriber in the network and thus operates as identification for the MS user. The terminal equipment TE part of the MS can also be provided with a specific international mobile equipment identity IMEI, which is not relevant for the invention, however. The USIM also contains a secret key K, an algorithm for forming a cipher key CK, an algorithm for verifying an authentication response AUTN transmitted from the PLMN, and an algorithm for forming a reference authentication response RES (if the AUTN has been verified).

According to a preferred embodiment, data transmission services of the UMTS network PLMN can be used via the local network BAN. In such a case the UMTS network comprises, besides the known UMTS access network elements, a broadband service node BSN for one or more local networks BAN. In this embodiment, after successful authentication (carried out by the authentication server AUTS) the MS can also use the services of the roamed UMTS network PLMN (either via the local network BAN and the service node BSN or directly via a node B and a radio network controller RNC). In many respects the operation of a BSN corresponds to the operation of an RNC. However, a BSN cannot be arranged to control the radio resources of the local network, and therefore a conventional lub interface is replaced with an I4 interface to the local network BAN, so that the BSN communicates with the MS via the local network BAN. BSN functions include:
- executing RRC (Radio Resource Control) signalling protocols defined for the UTRAN possibly according to BAN-specific restrictions
- multiplexing higher-layer UMTS data streams, such as logic channels or transport channels, to IP-based transmission paths (e.g. a UDP/IP tunnel) to the BAN, and demultiplexing from the BAN
- managing radio connections
- providing UMTS encryption
- compressing UMTS IP headers
- UMTS RLC-level (Radio Link Control) retransmissions.

The functions of the BSN can possibly also comprise monitoring of the use of the local network BAN resources in order to check the charging of the BAN operator. The local network BAN can be shared by several UMTS networks. The local network BAN can also be connected to several BSNs, and a BSN can be connected to one or more local networks BAN. A BSN can be divided into different user plane and control plane server and gateway functions. A BSN can be connected to an SGSN, a mobile switching centre MSC and possibly to other UMTS core network elements via a standard lu interface. A BSN can also be connected to other BSNs or UTRAN RNCs via lur signalling interfaces in order to support handover inside a UTRAN or between UT-RANs.

In an embodiment where a mobile station MS can utilize UMTS data transmission services, the MS supports at least some of the protocol entities required for communicating with the UMTS network PLMN. The MS contains means for implementing lower layers (L1, L2) of the local network BAN, and means for communicating with the UMTS network via the local network. In this embodiment, the MS also comprises the following functions:
- executing UMTS higher-layer signalling protocols determined in the 3GPP specifications. Such protocols include RRC (Radio Resource Control), session management and mobility management.
- implementing limited functionality of UMTS user plane protocols, and communicating user plane data with the BSN in view of possible limitations resulting from the local network BAN. Such protocols include RLC (Radio Link Control) and PDCP (Packet Data Control Protocol).
- multiplexing higher-layer UMTS data streams to the UDP/IP-based communication of the lower layers, and inversely demultiplexing the received data into UMTS data streams.

According to a preferred embodiment, the MS is a dual-mode terminal, which is also able to connect not only to the local network BAN but also to a UMTS network via UTRAN base stations (node B).

Figure 2 is a flowchart illustrating a method according to a preferred embodiment of the invention. System data of one or more mobile networks PLMN is stored 201 in a local network BAN, preferably in a gateway element BANGW. This data includes at least the identifiers (PLMN ID) of the PLMNs to which it is possible to connect from the local network BAN. The data also includes each network element identifier linked with the PLMN network identifier PLMN ID, such as an identifier of the authentication server AUTS according to a preferred embodiment. This identifier determines the network element that should be applied when using UMTS network services. The identifier thus identifies the UMTS network PLMN in the local network BAN. The identifier can also indicate some other UMTS network PLMN service or network element, such as a support node BSN. The data on the UMTS network PLMN can be determined 201 after the operators of the UMTS network PLMN and the local network BAN have agreed on the use of the PLMN authentication services, or the data can be transmitted from the network PLMN whenever needed. According to a preferred embodiment, PLMN identifiers PLMN ID are also determined 201 in the USIM connected to the MS to be used in network selection. A PLMN ID can consist for example of MCC (Mobile Country Code) and MNC (Mobile Network Code) sections of the IMSI. The PLMN identifiers are added to the USIM for example during the personalization thereof before the home operator HPLMN gives the USIM to the user. It is possible to determine 201, in a memory included in the UICC, a PLMN identifier list controlled by the operator, and a PLMN identifier list controlled by the user, which contain PLMN identifiers in order of priority. The PLMN identifiers can also be supplemented with an identifier indicating the access technology, such as UTRA or GSM. PLMN identifiers can also be determined in the memory M of the mobile station MS.

According to a preferred embodiment, a network element identifier linked with a PLMN identifier PLMN ID is a realm identifier, which is a part of an NAI (Network Access Identifier) that is of the form usemame@realm. A realm identifier is typically used in the AAA protocol to select a suitable AAA server (authentication server). A realm identifier is preferably a domain name, such as 'server_finland.com', which can be used to determine the IP address of the server by means of the name service. Table 1 illustrates an imaginary table of correspondences combining PLMN identifiers PLMN ID and the network element realm identifiers.

**Table 1.**

| ***PLMN ID*** | ***Realm*** |
|---|---|
| 1122 | Mobileoperator1_server1.com |
| 1234 | Mobileoperator2_server1.com |
| 4365 | Mobileoperator3_server5.fi |

One UMTS network identifier can naturally be provided with several network element identifiers, if alternative access is to be provided for example as backup in failure situations in the primary network element.

System information related to UMTS networks PLMN is determined in the local network BAN and transmitted 202 to the mobile station MS (information about networks, the authentication services and possibly other services of which can be utilized via the network BAN). The system information contains at least the PLMN identifiers PLMN ID of the UMTS networks PLMN, and the network element identifiers linked therewith, but other information is also possible. For example data on local services can be transmitted within the system information, and the mobile station can later utilize the data in order to obtain a service of the UMTS network PLMN. The system information can also comprise system information that is broadcast to mobile stations in cells of the UMTS network PLMN. This system information can be broadcast in the access points AP of the local network, and a roaming mobile station MS will therefore receive data on the available UMTS networks in advance. For example, the BANGW can implement broadcast of system information at certain intervals in the access points AP connected thereto. The system information can also be transmitted after the mobile station has set up a radio connection to the local network BAN and authentication must be carried out. Moreover, the MS can specifically ask for transmission of the system data for example by indicating that it wants to use the services of the UMTS network PLMN.

The mobile station performs 203 PLMN selection on the basis of a comparison of the received PLMN identifiers PLMN ID and the PLMN identifiers stored in the USIM (possibly also in the memory M) according to a preferred embodiment. According to a preferred embodiment, a network is selected as far as possible according to the 3GPP UMTS specifications, and the PLMN lists and the USIM can be utilized in the MS similarly as in a UMTS mobile station. According to the UMTS specifications, network selection can be either automatic or manual. In automatic network selection, the PLMN list stored in the USIM is checked in order of priority to see whether a PLMN identifier determined on the list is defined in the system information received from the local network BAN. When the mobile station finds a UMTS network PLMN the PLMN ID of which is stored in the USIM and received from the local network BAN, the MS selects this PLMN. If none of the PLMN identifiers stored in the USIM are found among the PLMN identifiers received from the local network BAN, the user can be given a possibility to select a PLMN identifier. Even several lists can be stored in the USIM, for example a PLMN list controlled by the user and a PLMN list controlled by the operator, and the identifiers to be checked first are preferably those of the user's PLMN list. If network selection is manual, the user is shown all the names, or usually operator identifiers of the networks, according to the PLMN identifiers received from the local network, from which the user can select the PLMN to be used. These networks are usually presented in a similar order as on the list defined in the USIM. The mobile station MS can also maintain a list of forbidden networks (forbidden PLMNs), which are not taken into account in the network selection 203.

After the MS has selected a PLMN, it can transmit 204 a request to the local network BAN for setting up a connection with a network element according to the network element identifier linked with the identifier of the selected PLMN. The local network BAN finds out the IP address of the network element from the network identifier, which is typically a domain name, by means of the name service or based on the data configured in the AAA network elements, and carries out the operations required to set up a connection 204 between the MS and the network element. If the selected network PLMN cannot be used for some reason, the network selection 203 can be carried out again as described above either automatically or manually, and a connection 204 can be set up to another UMTS network PLMN. The mobile station MS and the local network BAN may thus utilize the identifier of the network element to identify the UMTS network PLMN.

According to a preferred embodiment, the network element is the authentication server AUTS, and the PLMN is used at least for authentication and charging of the MS user on the basis of the subscriber data contained in the USIM and the HPLMN. The AUTS can utilize prior art UMTS signalling for requesting authentication data for the USIM, and it performs authentication and authorizes provision of services to the MS. Due to the authorization, the network element of the BAN implementing access control, such as the BANGW or the AP, can provide access to the Internet or to other parts of the WLAN. According to an embodiment, access can be provided to the services of the UTMS network PLMN that the mobile station can use after successful authentication.

An advantage of this embodiment is that the user can utilize the services of the roamed local networks BAN and UMTS networks (and GSM networks) by means of a conventional USIM (a UICC), which does not have to be modified due to the invention. The user can for example connect his UICC card to a mobile station given at the airport, with which the USIM can be authenticated, and the user can be charged via the home network HPLMN for the data transmission services he has used.

Figure 3 illustrates this embodiment in the form of a signalling chart, where a roaming mobile station MS is provided, after the network selection, with access to the server AUTS that implements the authentication of the selected PLMN. The AUTS implements, by means of UMTS technology, the authentication of the MS and also provides a cipher key, which can be used in data transmission over a radio interface provided by the local network. If the MS does not utilize other UMTS services, this embodiment does not require the service node BSN illustrated in connection with Figure 1a and the UMTS protocols required in the MS for communicating with the service node (however, the MS does need means for operating the USIM). What is needed from the UMTS network PLMN of Figure 1a is the authentication server AUTS and access therefrom to the authentication centre HLR/AuC. According to a preferred embodiment, authentication between the MS and the AUTS is based on the EAP (Extensible Authentication Protocol) Authentication and Key Agreement (AKA), set forth in the IETF Internet draft "*EAP AKA Authentication*", October 2001, J. Arkko and H. Haverinen, determining the UMTS EAP utilizing the AKA mechanism.

A subscriber identification module USIM comprised in the MS provides the MS with an identity IMSI. A process of authenticating an MS is typically triggered when the MS starts setting up a connection to the local network BAN. Before a mobile station MS is allowed to set up a connection to a network other than the BAN, the authentication must be completed in an acceptable manner. As described above, the BANGW transmits 301 system information to the MS either as broadcast or in response to a request received from the MS. By means of this information, the MS performs 302 network selection according to the received PLMN identifiers and the PLMN identifiers stored in the USIM (PLMN selection). The BANGW, or according to another embodiment an access point AP that operates as an authenticator for the EAP, can transmit 303 to the MS a request for transmitting a user identity [EAP-Request/Identity].

The MS requests 304 (IMSI request) the USIM to transmit an IMSI, and the USIM returns 305 the IMSI. The MS transmits 306 a response [EAP-Response/Identity] preferably comprising a network identifier NAI. The response is routed via the IP network IPNW typically by means of the AAA protocol to the AUTS, which acts as an EAP authentication server. The NAI comprises the IMSI obtained from the USIM, and the realm identifier of the authentication server AUTS of the roamed network PLMN obtained as described above. The MS is thus provided with access via the local network BAN to the authentication server AUTS of the selected network PLMN by means of the identifier thereof, which is preferably a realm identifier. Therefore the MS is configured to replace, in the NAIs of the EAP messages, the realm identifier of its own default authentication server (in the HPLMN) with the realm identifier of the authentication server AUTS of the roamed network PLMN. The request 306 can be transmitted in an encrypted form to the BANGW for example by using the Diffie-Hellman algorithm. The MS can also transmit its own security code MS_RAND, which is typically a random number, in the request 306. By means of the security code MS_RAND, the MS can later ensure that the party providing a UMTS vector has access to the secret key K stored in the subscriber's HPLMN. However, it is not necessary to use a security code. It should be noted that unlike shown in Figure 3, the MS can also transmit an EAP request 306 independently and without a specific request 303 after it has selected the network.

The authenticating network element (BANGW or AP) can decrypt the request 306, if required, and forward 307 the EAP request [EAP-Response/Identity] to the AUTS on the basis of the IP address obtained from the realm identifier of the NAI, or by utilizing conventional manners of the AAA protocol of controlling AAA traffic to a suitable AAA server by means of the realm identifier of the NAI by utilizing AAA configuration data. The authenticator can alternatively forward 307 the request to an AAA proxy server, which selects the correct server AUTS by means of the realm identifier of the NAI. The AUTS requests 308 (Auth. Data Req.) UMTS authentication vectors from the authentication centre HLR/AuC of the home network HPLMN (typically via the SGSN or the 3GMSC of the HPLMN). Authentication vectors are formed 309 (Calculate AV(s)) in the authentication centre AuC of the HPLMN in a manner defined in the UMTS specifications. One authentication vector comprises a random number RAND, an expected response XRES, a cipher key CK, an integrity key IK and an authentication token AUTN. The HLR/AuC transmits 310 the authentication vector to the AUTS (typically via other network elements of the UMTS core network) [Auth. Data Resp.]. It is also possible to transmit several authentication vectors from the HPLMN, so that the AUTS preferably selects one vector and stores the others for subsequent use.

The AUTS transmits 311 an authentication request [EAP-Req/USIM-Chall.] comprising one or more challenges RAND for the MS, and an authentication token AUTN (the AUTN is not used if GSM authentication is applied). This message can also comprise data related to charging. The message can also be encrypted by means of a security code MS_RAND. The BANGW forwards 312 the authentication request [EAP-Req/USIM-Chall.] to the MS.

In the MS, the challenge(s) RAND and the authentication token AUTN are supplied 313 to the USIM, which checks the authentication token. If the AUTN can be accepted, the USIM calculates 314 (Calculate RES(s)) an authentication response(s) RES similarly as in the authentication centre HLR/AuC, and forwards 315 the authentication response RES to the MS processing unit CPU (to an application entity managing tasks related to authentication and calculation of the cipher key CK).

The MS transmits 316 a response [EAP-Resp/USIM-Chall.] comprising at least the authentication response RES to the authenticator BANGW (or AP). The authenticator BANGW forwards 317 the response [EAP-Resp/USIM-Chall.] to the authentication server AUTS. The AUTS checks 318 (Check RES) the authentication response transmitted by the MS by comparing it to the expected authentication response XRES. If XRES and RES are identical, the MS (USIM) has been successfully authenticated.

The AUTS transmits 319 data about the successful authentication [EAP-Success] to the authenticator (BANGW or AP). This message preferably comprises a cipher key CK. The message 319 can also contain data (for example data on the quality of service QoS) about the services the MS is entitled to use. As a result of the message (319) received from the AUTS, the authenticator can allow data transmission services to be provided to the MS in the local network, for example in the case of a WLAN by allowing traffic via a controlled gate according to the IEEE 802.1x standard. For example, the MS can be provided with access to the Internet via the local network BAN. The authenticator forwards 320 data about successful authentication to the MS. The USIM can then calculate the cipher key CK and possibly the integrity key IK, and both the MS and the authenticator can transmit the cipher key CK to the ciphering means, which thereafter cipher traffic by means of the cipher keys according to the UMTS network. The MS can then be provided 321 (Usage of BAN Services) at least with data transmission services of the local network BAN. The charging of the MS can be initiated via the BANGW or the access point AP and the authentication server AUTS, which collects charging data from the BANGW or the AP by means of the AAA protocol, such as a RADIUS protocol, and generates charging data records CDR to be transmitted to the UMTS charging system.

If authentication was not successful, the message 319 contains information about the unsuccessful authentication, whereupon the MS will not preferably be provided with services in the local network BAN (nor preferably in the roamed UMTS network PLMN).

There are several alternative embodiments of the authentication procedure illustrated above. According to an embodiment, the data transmission between the MS and the authenticating base station AP can be implemented for example by means of the EAP for WLAN (EAPOL) determined in the IEEE 802.1x protocol. The RADIUS (Remote Authentication Dial In User Service) protocol, in turn, can be used between the authenticator (AP or BANGW) and the AUTS. In such a case there can be RADIUS proxy servers between the authenticator and the AUTS for transmitting RADIUS messages. As described above, the AUTS can communicate with the SGSN (or the 3GMSC) (either directly via the HPLMN or the PLMN) for example by means of a protocol over the TCP/IP, and the SGSN (3GMSC) in turn can communicate with the authentication centre HLR/AuC according to the Gr interface (the 3GMSC in turn communicates according to the MAP). The AUTS can also communicate directly with the AuC for example using the MAP.

It should be noted that unlike shown in Figure 3, the PLMN identifier PLMN ID and the authentication server identifiers linked therewith can also be transmitted in an [EAP-Request/Identity] message (303). The MS thus performs network selection after it has received the EAP request and it responds with an NAI (step 306) containing the realm identifier according to the selected network. According to an embodiment, the AP of the local network operates as an EAP authenticator instead of the BANGW. It is also possible that the MS transmits a request [EAP-Response/Identity], to which the BANGW responds with system information.

When the roaming mobile station MS has selected the UMTS network PLMN to be used, and the authentication has been successfully completed as described above, the MS can use the UMTS network also for other purposes, as illustrated already in connection with Figure 1 a. One possibility is to set up a data transmission connection via the local network BAN to the UMTS network PLMN by means of the aforementioned service node BSN and the access it provides to the UMTS core network and particularly to the SGSN. The MS can transmit and receive data via a broadband connection provided by the local network BAN by utilizing, however, the PLMN coverage and the services specified in the subscription, which the user has also used via the WCDMA radio access of the UMTS network. This expands the availability of the UMTS services and provides easy access to the service also for mobile stations MS roaming outside the HPLMN.

If the system supports full mobility between different access networks, the MS can also start using the radio access provided by the radio network controllers and base stations (node B) of the selected UMTS network PLMN. Such a handover can be implemented for example automatically when none of the local network access points AP can provide sufficiently high data transmission quality.

Unlike in the embodiments shown in Figures 2 and 3, the PLMN identifiers PLMN ID and the authentication server identifiers linked therewith can also be determined in some other location than in the local network BAN, and they can be forwarded to the roaming MS from some other location. For example a UMTS network PLMN can store such data and broadcast it via UMTS base stations (nodes B) or possibly also via the local network BAN, which only has to forward the data to the MS.

It is obvious to those skilled in the art that as the technology develops the basic idea of the invention can be implemented in various way. Thus, the invention and the embodiments thereof are not restricted to the examples described above, but they can vary within the scope of the claims.

## Claims

1. A method of arranging roaming in a telecommunications system comprising at least one wireless local network, at least one public land mobile network, and at least one wireless terminal equipment comprising means for setting up a data transmission connection at least with the wireless local network, **characterized by** the method comprising:
determining (201), in the telecommunications system, public land mobile network identifiers and network element identifiers linked with said public land mobile network identifiers,
transmitting (202) to the terminal equipment said public land mobile network identifiers and the network element identifiers linked with said public land mobile network identifiers, and
providing (204) the terminal equipment with access via the wireless local network to a network element identified by a network element identifier, which is linked with an identifier of a public land mobile network selected by the terminal equipment on the basis of said transmitted public land mobile network identifiers and the network element identifiers linked with said public land mobile network identifiers.

2. A method according to claim 1, **characterized by**
storing, in the local network, said public land mobile network identifiers and the network element identifiers linked with said public land mobile network identifiers, and
transmitting (202) said public land mobile network identifiers and the network element identifiers linked with said public land mobile network identifiers from the local network to the terminal equipment after the terminal equipment has set up a connection to the local network.

3. A method according to claim 2, **characterized by**
transmitting (202) said public land mobile network identifiers and the network element identifiers linked with said public land mobile network identifiers from the local network in response to a request received from the terminal equipment.

4. A method according to any one of the preceding claims,
**characterized in that**
said network element of the public land mobile network is an authentication server, the method further comprising the steps of
carrying out (318) authentication of the terminal equipment by the authentication server, and
allowing provision of data transmission services in the local network or in the selected public land mobile network in response to successful authentication of the terminal equipment.

5. A method according to claim 4, **characterized in that**
the public land mobile network is a universal mobile telecommunications system network, and the terminal equipment comprises a universal subscriber identity module, which stores algorithms required for calculating an authentication response, and a subscriber identifier and a secret key, wherein
authentication is performed by the authentication server by comparing the authentication response calculated in the universal subscriber identity module of the terminal equipment to an expected authentication response received from an authentication centre of the subscriber's home public land mobile network.

6. A method according to any one of the preceding claims,
**characterized in that**
data transmission between the local network and the public land mobile network is based on the internet protocol, wherein
data between the terminal equipment and the network element of the selected public land mobile network is transmitted by means of messages whose network access identifiers comprise the domain name of the authentication server of the selected public land mobile network as a realm section.

7. A wireless terminal equipment arranged to set up a data transmission connection at least with a wireless local network, wherein the terminal equipment is arranged to select (203) a public land mobile network on the basis of a comparison of received public land mobile network identifiers and the public land mobile network identifiers in a memory of or connected to the terminal equipment, **characterized in that**
the terminal equipment is arranged to receive (301) network element identifiers linked with said public land mobile network identifiers, and
the terminal equipment is arranged to set up (204) a connection via the wireless local network to a network element defined by a network element identifier, which is linked with an identifier of the public land mobile network selected by the terminal equipment.

8. A terminal equipment according to claim 7, **characterized**
**in that**
the terminal equipment comprises means for connecting a subscriber identification module containing subscriber data required for using services of the public land mobile network,
the terminal equipment is arranged to select (302) a network on the basis of the public land mobile network identifiers contained in the subscriber identification module of the terminal equipment,
the subscriber identification module is arranged to form (314) an authentication response used in the authentication, and
the terminal equipment is arranged to transmit (316) the authentication response to the network element.

9. The terminal equipment according to claim 8, wherein the terminal equipment is configured to transmit a request to the local network for transmitting said public land mobile network identifiers and the network element identifiers linked with said public land mobile network identifiers, and
the terminal equipment is configured to receive said public land mobile network identifiers and the network element identifiers linked with said public land mobile network identifiers from the local network.

10. A terminal equipment according to claim 7,
**characterized in that** the terminal equipment is configured to set up the connection via the local network to an authentication server for authenticating the terminal equipment as a precondition of provision of data transmission services via the local network in response to successful authentication of the terminal equipment.

11. The terminal equipment according to claim 7,
**characterized in that** the terminal equipment is configured to check public land mobile network identifiers on a list stored in a subscriber identity module in order of priority,
the terminal equipment is configured to compare the identifiers on the list to the public land mobile network identifiers received from the local network in order of priority, and
the terminal equipment is configured to select a public land mobile network, the identifier of which is also found from the public land mobile network identifiers received from the local network.

12. The terminal equipment according to claim 11,
**characterized in that** the subscriber identity module comprises a first list of public land mobile network identifiers controlled by a user and a second list of of public land mobile network identifiers controlled by an operator, and
the terminal equipment is configured to check identifiers of the first list before checking identifiers of the second list.

13. The terminal equipment according to claim 7,
**characterized in that** the public land mobile network identifiers in a memory of or connected to the terminal equipment are supplemented by an identifier indicating an access technology.

14. A terminal equipment according to claim 7,
**characterized in that** the terminal equipment is configured to transmit a message whose network access identifier comprises the domain name of an authentication server of the selected public land mobile network as a realm section.

15. A computer program product comprising code means for performing the steps of: selecting (301) a public land mobile network on the basis of a comparison of received public land mobile network identifiers and public land mobile network identifiers contained in a mobile station, **characterized by** causing the mobile station to set up (204) a connection via a wireless local network to a network element defined by a network element identifier, which is linked with an identifier of the selected public land mobile network.

16. A computer program product according to claim 15, **characterized by** comprising a computer program code portion for causing the mobile station to transmit a message whose network access comprises the domain name of an authentication server of the selected public land mobile network as a realm section.

17. A network element for a wireless local network, **characterized in that** the network element is configured to store (201) public land mobile network identifiers and network element identifiers linked with said public land mobile network identifiers, and
the network element is configured to transmit (202) said public land mobile network identifiers and the network element identifiers linked therewith to the terminal equipment, and
the network element is configured to provide (204) the terminal equipment with access via the wireless local network to a network element identified by a network element identifier, which is linked with an identifier of a public land mobile network selected by the terminal equipment on the basis of said transmitted public land mobile network identifiers and the network element identifiers linked with said public land mobile network identifiers.

18. A network element of claim 17, **characterized in that** the network element is configured to operate as an authenticator for an extensible authentication protocol applied for the terminal equipment.

19. A network element of claim 17, **characterized in that** the network element is configured to transmit (307) an extensible authentication protocol message to an authentication server in a public land mobile network on the basis of an extensible authentication protocol request or response message from the terminal equipment,
the network element is configured to forward (312) an authentication request from the authentication server to the terminal equipment,
the network element is configured to forward (317) an authentication response from the terminal equipment to the authentication server,
the network element is configured to receive (319) information on success of the authentication from the authentication server, and
the network element is configured to allow (312) data transmission services to be provided to the terminal equipment in the wireless local network in response to information from the authentication server indicating successful authentication.

20. A network element according to claim 17, **characterized**
**in that** data transmission between the local network and the public land mobile network is based on the internet protocol and the network element is configured to provide data transmission between the terminal equipment and the network element of the selected public land mobile network on the basis of messages whose network access identifiers comprise the domain name of an authentication server of the selected public land mobile network as a realm section.

21. A method for arranging roaming in a telecommunications system comprising at least one wireless local network, at least one public land mobile network, and at least one wireless terminal equipment comprising means for setting up a data transmission connection at least with the local network, the method comprising: selecting (203) a public land mobile network by means of a comparison of received public land mobile network identifiers and public land mobile network identifiers contained in the terminal equipment, **characterized by** the method further comprising:
receiving (202) by the terminal equipment from the telecommunications system said public land mobile network identifiers and network element identifiers linked therewith, and
setting up (204) a connection via the wireless local network to a network element defined by the network element identifier, which is linked with the identifier of the public land mobile network selected by the terminal equipment.

22. A method according to claim 21, **characterized in that**
data transmission between the local network and the public land mobile network is based on the internet protocol, wherein
data between the terminal equipment and the network element of the selected public land mobile network is transmitted by means of messages whose network access identifiers comprise the domain name of the authentication server of the selected public land mobile network as a realm section.

23. A method according to claim 21, **characterized by** storing, in the subscriber identity module contained in the terminal equipment, at least one list comprising the public land mobile network identifiers in order of priority,
comparing, in the terminal equipment, the identifiers on the list to the public land mobile network identifiers received from the local network in order of priority, and
selecting (301) a public land mobile network the identifier of which is also found from the public land mobile network identifiers received from the local network.

## Patentansprüche

1. Verfahren zum Einrichten von Roaming in einem Telekommunikationssystem, das wenigstens ein drahtloses lokales Netz, wenigstens ein öffentliches Landmobilnetz und wenigstens ein drahtloses Endgerät umfasst, das ein Mittel zum Aufbauen einer Datenübertragungsverbindung mit wenigstens dem drahtlosen lokalen Netz umfasst, **dadurch gekennzeichnet, dass** das Verfahren umfasst:
Bestimmen (201), in dem Telekommunikationssystem, von öffentlichen Landmobilnetzkennungen und Netzelementkennungen, die mit den öffentlichen Landmobilnetzkennungen verknüpft sind,
Übertragen (202) an das Endgerät der öffentlichen Landmobilnetzkennungen und der Netzelementkennungen, die mit den öffentlichen Landmobilnetzkennungen verknüpft sind, und
Versorgen (204) des Endgerätes mit einem Zugang über das drahtlose lokale Netz zu einem Netzelement, das durch eine Netzelementkennung identifiziert ist, welche mit einer Kennung eines öffentlichen Landmobilnetzes verknüpft ist, das durch das Endgerät basierend auf den übertragenen öffentlichen Landmobilnetzkennungen und den Netzelementkennungen ausgewählt wird, die mit den öffentlichen Landmobilnetzkennungen verknüpft sind.

2. Verfahren nach Anspruch 1, **gekennzeichnet durch** Speichern, in dem lokalen Netz, der öffentlichen Landmobilnetzkennungen und der Netzelementkennungen, die mit den öffentlichen Landmobilnetzkennungen verknüpft sind, und
Übertragen (202) der öffentlichen Landmobilnetzkennungen und der Netzelementkennung, die mit den öffentlichen Landmobilnetzkennungen verknüpft sind, von dem lokalen Netz an das Endgerät, nachdem das Endgerät eine Verbindung mit dem lokalen Netz aufgebaut hat.

3. Verfahren nach Anspruch 2, **gekennzeichnet durch**
Übertragen (202) der öffentlichen Landmobilnetzkennungen und der Netzelementkennung, die mit den öffentlichen Landmobilnetzkennungen verknüpft sind, von dem lokalen Netz in Reaktion auf eine Anfrage, die von dem Endgerät empfangen wurde.

4. Verfahren nach einem der vorhergehenden Ansprüche, **dadurch gekennzeichnet, dass**
das Netzelement des öffentlichen Landmobilnetzes ein Authentifizierungsserver ist, wobei das Verfahren weiter die Schritte umfasst:
Ausführen (318) der Authentifizierung des Endgerätes durch den Authentifizierungsserver, und
Erlauben der Bereitstellung von Datenübertragungsdiensten in dem lokalen Netz oder in dem gewählten öffentlichen Landmobilnetz in Reaktion auf eine erfolgreiche Authentifizierung des Endgerätes.

5. Verfahren nach Anspruch 4, **dadurch gekennzeichnet, dass**
das öffentliche Landmobilnetz ein universales Mobiltelekommunikationssystemnetz ist, und das Endgerät ein universelles Teilnehmeridentitätsmodul umfasst, welches Algorithmen speichert, die für die Berechnung einer Authentifizierungsanfrage benötigt werden, und eine Teilnehmerkennung und einen geheimen Schlüssel, wobei
die Authentifizierung durch den Authentifizierungsserver durch Vergleichen der Authentifizierungsantwort ausgeführt wird, die in dem universellen Teilnehmeridentitätsmodul des Endgeräts berechnet wird, mit einer erwarteten Authentifizierungsantwort, die von einer Authentifizierungszentrale des öffentlichen Heimatlandmobilnetzes des Teilnehmers empfangen wurde.

6. Verfahren nach einem der vorhergehenden Ansprüche, **dadurch gekennzeichnet, dass**
die Datenübertragung zwischen dem lokalen Netz und dem öffentlichen Landmobilnetz auf dem Intemetprotokoll basiert, wobei
Daten zwischen dem Endgerät und dem Netzelement des ausgewählten öffentlichen Landmobilnetzes durch Nachrichten übertragen werden, deren Netzzugangskennungen den Domainnamen des Authentifizierungsservers des gewählten öffentlichen Landmobilnetzes als einen Bereichsabschnitt aufweisen.

7. Drahtloses Endgerät, das eingerichtet ist, eine Datenübertragungsverbindung wenigstens mit einem drahtlosen lokalen Netz aufzubauen, wobei das Endgerät eingerichtet ist, ein öffentliches Landmobilnetz basierend auf einem Vergleich von empfangenen öffentlichen Landmobilnetzkennungen und den öffentlichen Landmobilnetzkennungen in einem Speicher des Endgeräts oder in einem mit dem Endgerät verbundenen Speicher auszuwählen (203), **dadurch gekennzeichnet, dass**
das Endgerät eingerichtet ist, Netzelementkennungen zu empfangen (301), die mit den öffentlichen Landmobilnetzkennungen verknüpft sind, und
das Endgerät eingerichtet ist, eine Verbindung über das drahtlose lokale Netz mit einem Netzelement aufzubauen (204), das durch eine Netzelementkennung definiert ist, welche mit einer Kennung des öffentlichen Landmobilnetzes verknüpft ist, die von dem Endgerät ausgewählt ist.

8. Endgerät nach Anspruch 7, **dadurch gekennzeichnet, dass**
das Endgerät ein Mittel zum Verbinden eines Teilnehmeridentifizierungsmoduls aufweist, das Teilnehmerdaten enthält, die für die Verwendung von Diensten des öffentlichen Landmobilnetzes benötigt werden, und
das Endgerät eingerichtet ist, ein Netz basierend auf den öffentlichen Landmobilnetzkennungen auszuwählen (302), die in dem Teilnehmeridentifizierungsmodul des Endgerätes enthalten sind,
das Teilnehmeridentifizierungsmodul eingerichtet ist, eine Authentifizierungsantwort zu bilden (314), die bei der Authentifizierung verwendet wird, und
das Endgerät eingerichtet ist, die Authentifizierungsantwort an das Netzelement zu übertragen (316).

9. Endgerät nach Anspruch 8, wobei das Endgerät eingerichtet ist, eine Anfrage an das lokale Netz zur Übertragung der öffentlichen Landmobilnetzkennungen zu übertragen und die Netzelementkennungen mit den öffentlichen Landmobilnetzkennungen verknüpft sind, und
das Endgerät eingerichtet ist, die öffentlichen Landmobilnetzkennungen und die Netzelementkennungen, die mit den öffentlichen Landmobilnetzkennungen verknüpft sind, von dem lokalen Netz zu empfangen.

10. Endgerät nach Anspruch 7, **dadurch gekennzeichnet, dass** das Endgerät eingerichtet ist, die Verbindung über das lokale Netz mit einem Authentifizierungsserver zur Authentifizierung des Endgerätes aufzubauen, als eine Vorbedingung zur Bereitstellung von Datenübertragungsdiensten über das lokale Netz in Reaktion auf eine erfolgreiche Authentifizierung des Endgerätes.

11. Endgerät nach Anspruch 7, **dadurch gekennzeichnet, dass** das Endgerät eingerichtet ist, die öffentlichen Landmobilnetzkennungen auf einer Liste zu überprüfen, die in einem Teilnehmeridentitätsmodul in der Reihenfolge ihrer Priorität gespeichert sind,
das Endgerät eingerichtet ist, die Kennungen auf der Liste mit den öffentlichen Landmobilnetzkennungen zu vergleichen, die von dem lokalen Netz in der Reihenfolge ihrer Priorität empfangen werden, und
das Endgerät eingerichtet ist, ein öffentliches Landmobilnetz auszuwählen, wobei die Kennung von diesem auch bei den öffentlichen Landmobilnetzkennungen gefunden wird, die von dem lokalen Netz empfangen werden.

12. Endgerät nach Anspruch 11, **dadurch gekennzeichnet, dass** das Teilnehmeridentitätsmodul eine erste Liste von öffentlichen Landmobilnetzkennungen umfasst, die von einem Benutzer gesteuert wird, und eine zweite Liste von öffentlichen Landmobilnetzkennungen umfasst, die von einem Betreiber gesteuert wird, und
das Endgerät eingerichtet ist, die Kennungen der ersten Liste zu überprüfen, bevor die Kennungen der zweiten Liste überprüft werden.

13. Endgerät nach Anspruch 7, **dadurch gekennzeichnet, dass** die öffentlichen Landmobilnetzkennungen in einem Speicher des Endgerätes oder in einem damit verbundenen Speicher durch eine Kennung ergänzt wird, die eine Zugangstechnik angibt.

14. Endgerät nach Anspruch 7, **dadurch gekennzeichnet, dass** das Endgerät eingerichtet ist, eine Nachricht zu übertragen, wessen Netzzugangskennung den Domainnamen eines Authentifizierungsservers des gewählten öffentlichen Landmobilnetzes als einen Bereichsabschnitt umfasst.

15. Computerprogrammprodukt, das ein Codemittel zum Ausführen der Schritte umfasst: Auswählen (301) eines öffentlichen Landmobilnetzes basierend auf einem Vergleich der empfangenen öffentlichen Landmobilnetzkennungen und den öffentlichen Landmobilnetzkennungen, die in einer Mobilstation enthalten sind, **gekennzeichnet durch** Veranlassen der Mobilstation, eine Verbindung über ein drahtloses lokales Netz mit einem Netzelement aufzubauen (204), das **durch** eine Netzelementkennung definiert ist, welche mit einer Kennung des gewählten öffentlichen Landmobilnetzes verknüpft ist.

16. Computerprogrammprodukt nach Anspruch 15, **gekennzeichnet durch** Umfassen eines Computerprogrammcodebereiches zum Veranlassen der Mobilstation, eine Nachricht zu übertragen, wessen Netzzugang den Domainnamen eines Authentifizierungsservers des gewählten öffentlichen Landmobilnetzes als einen Bereichsabschnitt umfasst.

17. Netzelement für ein drahtloses lokales Netz, **dadurch gekennzeichnet, dass** das Netzelement eingerichtet ist, öffentliche Landmobilnetzkennungen zu speichern (201) und Netzelementkennungen, die mit den öffentlichen Landmobilnetzkennungen verknüpft sind, und
das Netzelement eingerichtet ist, die öffentlichen Landmobilnetzkennungen zu übertragen (202) und die Netzelementkennungen, die damit mit dem Endgerät verknüpft sind, und
das Netzelement eingerichtet ist, das Endgerät mit einem Zugang über das drahtlose lokale Netz zu einem Netzelement zu versorgen (204), das durch eine Netzelementkennung identifiziert ist, welche mit einer Kennung eines öffentlichen Landmobilnetzes verknüpft ist, das durch das Endgerät basierend auf den übertragenen öffentlichen Landmobilnetzkennungen und den Netzelementkennungen ausgewählt ist, die mit den öffentlichen Landmobilnetzkennungen verknüpft sind.

18. Netzelement nach Anspruch 17, **dadurch gekennzeichnet, dass** das Netzelement eingerichtet ist, als ein Authentifizierer für ein erweiterbares Authentifizierungsprotokoll, das für das Endgerät angewendet wird, betrieben zu werden.

19. Netzelement nach Anspruch 17, **dadurch gekennzeichnet, dass** das Netzelement eingerichtet ist, eine erweiterbare Authentifizierungsprotokollnachricht an einen Authentifizierungsserver in einem öffentlichen Landmobilnetz zu übertragen (307), basierend auf einer erweiterbaren Authentifizierungsprotokollanfrage- oder -antwortnachricht von dem Endgerät,
das Netzelement eingerichtet ist, eine Authentifizierungsanfrage von dem Authentifizierungsserver an das Endgerät weiterzuleiten (312),
das Netzelement eingerichtet ist, eine Authentifizierungsantwort von dem Endgerät an den Authentifizierungsserver weiterzuleiten (317),
das Netzelement eingerichtet ist, Information über den Erfolg der Authentifizierung von dem Authentifizierungsserver zu empfangen (319), und
das Netzelement eingerichtet ist, Datenübertragungsdienste zu erlauben (312), die dem Endgerät in dem drahtlosen lokalen Netz in Reaktion auf die Information von dem Authentifizierungsserver bereitgestellt werden sollen, die die erfolgreiche Authentifizierung angibt.

20. Netzelement nach Anspruch 17, **dadurch gekennzeichnet, dass** die Datenübertragung zwischen dem lokalen Netz und dem öffentlichen Landmobilnetz auf dem Intemetprotokoll basiert und das Netzelement eingerichtet ist, die Datenübertragung zwischen dem Endgerät und dem Netzelement des gewählten öffentlichen Landmobilnetzes basierend auf Nachrichten bereitzustellen, wessen Netzzugangskennungen den Domainnamen eines Authentifizierungsservers des gewählten öffentlichen Landmobilnetzes als einen Bereichsabschnitt umfassen.

21. Verfahren zum Einrichtung von Roaming in einem Telekommunikationssystem, das wenigstens ein drahtloses lokales Netz umfasst, wenigstens ein öffentliches Landmobilnetz, und wenigstens ein drahtloses Endgerät, das ein Mittel zum Aufbauen einer Datenübertragungsverbindung wenigstens mit dem lokalen Netz umfasst, wobei das Verfahren umfasst: Auswählen (203) eines öffentlichen Landmobilnetzes durch einen Vergleich empfangener öffentlicher Landmobilnetzkennungen und öffentlicher Landmobilnetzkennungen, die in dem Endgerät enthalten sind, **dadurch gekennzeichnet, dass** das Verfahren weiter umfasst:
Empfangen (202) durch das Endgerät von dem Telekommunikationssystem der öffentlichen Landmobilnetzkennungen und der Netzelementkennungen, die damit verknüpft sind, und
Aufbauen (204) einer Verbindung über das drahtlose lokale Netz mit einem Netzelement, das durch die Netzelementkennung definiert ist, welche mit der Kennung des öffentlichen Landmobilnetzes verknüpft ist, das durch das Endgerät gewählt ist.

22. Verfahren nach Anspruch 21, **dadurch gekennzeichnet, dass**
die Datenübertragung zwischen dem lokalen Netz und dem öffentlichen Landmobilnetz auf dem Internetprotokoll basiert, wobei
Daten zwischen dem Endgerät und dem Netzelement des gewählten öffentlichen Landmobilnetzes durch Nachrichten übertragen werden, wessen Netzzugangskennungen den Domainnamen des Authentifizierungsservers des gewählten öffentlichen Landmobilnetzes als einen Bereichsabschnitt umfassen.

23. Verfahren nach Anspruch 21, **gekennzeichnet durch** Speichern, in dem Teilnehmeridentitätsmodul, das in dem Endgerät enthalten ist, wenigstens einer Liste, die öffentliche Landmobilnetzkennungen in der Reihenfolge ihrer Priorität umfasst,
Vergleichen, in dem Endgerät, der Kennungen auf der Liste mit den öffentlichen Landmobilnetzkennungen, die von dem lokalen Netz in der Reihenfolge ihrer Priorität empfangen wurden, und
Auswählen (301) eines öffentlichen Landmobilnetzes, wobei die Kennung von diesem auch bei den öffentlichen Landmobilnetzkennungen gefunden wird, die von dem lokalen Netz empfangen werden.

## Revendications

1. Procédé pour agencer une itinérance dans un système de télécommunication comportant au moins un réseau local sans fil, au moins un réseau mobile terrestre public, et au moins un équipement terminal sans fil comportant des moyens pour mettre en place une connexion de transmission de données au moins avec le réseau local sans fil, **caractérisé en ce que** le procédé comporte les étapes consistant à :
déterminer (201), dans le système de télécommunication, des identifiants de réseau mobile terrestre public et des identifiants d'élément de réseau liés auxdits identifiants de réseau mobile terrestre public,
transmettre (202), à l'équipement terminal, lesdits identifiants de réseau mobile terrestre public et les identifiants d'élément de réseau liés auxdits identifiants de réseau mobile terrestre public, et
fournir (204), à l'équipement terminal, un accès via le réseau local sans fil à un élément de réseau identifié par un identifiant d'élément de réseau, qui est lié à un identifiant d'un réseau mobile terrestre public choisi par l'équipement terminal sur la base desdits identifiants transmis de réseau mobile terrestre public et des identifiants d'élément de réseau liés auxdits identifiants de réseau mobile terrestre public.

2. Procédé selon la revendication 1, **caractérisé par** les étapes consistant à
stocker, dans le réseau local, lesdits identifiants de réseau mobile terrestre public et les identifiants d'élément de réseau liés auxdits identifiants de réseau mobile terrestre public, et
transmettre (202) lesdits identifiants de réseau mobile terrestre public et les identifiants d'élément de réseau liés auxdits identifiants de réseau mobile terrestre public du réseau local à l'équipement terminal après que l'équipement terminal a mis en place une connexion au réseau local.

3. Procédé selon la revendication 2, **caractérisé par** l'étape consistant à
transmettre (202) lesdits identifiants de réseau mobile terrestre public et les identifiants d'élément de réseau liés auxdits identifiants de réseau mobile terrestre public du réseau local en réponse à une demande reçue par l'équipement terminal.

4. Procédé selon l'une quelconque des revendications précédentes,
**caractérisé en ce que**
ledit élément de réseau du réseau mobile terrestre public est un serveur d'authentification, le procédé comportant en outre les étapes consistant à
mettre en oeuvre (318) l'authentification de l'équipement terminal par le serveur d'authentification, et
autoriser une fourniture de services de transmission de données dans le réseau local ou dans le réseau mobile terrestre public sélectionné en réponse au succès de l'authentification de l'équipement terminal.

5. Procédé selon la revendication 4, **caractérisé en ce que**
le réseau mobile terrestre public est un réseau de système de télécommunication mobile universel, et l'équipement terminal comporte un module d'identification de l'abonné universel, qui stocke des algorithmes nécessaires pour calculer une réponse d'authentification, et un identifiant d'abonné et une clé secrète, dans lequel
une authentification est mise en oeuvre par le serveur d'authentification en comparant la réponse d'authentification calculée dans le module d'identification de l'abonné universel de l'équipement terminal à une réponse d'authentification attendue reçue d'un centre d'authentification du réseau mobile terrestre public domestique de l'abonné.

6. Procédé selon l'une quelconque des revendications précédentes,
**caractérisé en ce que**
la transmission de données entre le réseau local et le réseau mobile terrestre public est basée sur le protocole Internet ; dans lequel
les données entre l'équipement terminal et l'élément de réseau du réseau mobile terrestre public sélectionné sont transmises au moyen de messages dont les identifiants d'accès au réseau comportent le nom de domaine du serveur d'authentification du réseau mobile terrestre public sélectionné en tant qu'une section de domaine.

7. Équipement terminal sans fil agencé pour mettre en place une connexion de transmission de données au moins avec un réseau local sans fil, dans lequel l'équipement terminal est agencé pour sélectionner (203) un réseau mobile terrestre public sur la base d'une comparaison entre des identifiants de réseau mobile terrestre public reçus et les identifiants de réseau mobile terrestre public dans une mémoire de, ou connectée à, l'équipement terminal, **caractérisé en ce que**
l'équipement terminal est agencé pour recevoir (301) des identifiants d'élément de réseau liés auxdits identifiants de réseau mobile terrestre public, et
l'équipement terminal est agencé pour mettre en place (204) une connexion via le réseau local sans fil à un élément de réseau défini par un identifiant d'élément de réseau, lequel est lié à un identifiant du réseau mobile terrestre public sélectionné par l'équipement terminal.

8. Équipement terminal selon la revendication 7, **caractérisé en ce que**
l'équipement terminal comporte des moyens pour connecter un module d'identification de l'abonné contenant des données d'abonné requises pour utiliser des services du réseau mobile terrestre public,
l'équipement terminal est agencé pour sélectionner (302) un réseau sur la base des identifiants de réseau mobile terrestre public contenus dans le module d'identification de l'abonné de l'équipement terminal,
le module d'identification de l'abonné est agencé pour former (314) une réponse d'authentification utilisée dans l'authentification, et
l'équipement terminal est agencé pour transmettre (316) la réponse d'authentification à l'élément de réseau.

9. Équipement terminal selon la revendication 8, dans lequel l'équipement terminal est configuré pour transmettre une demande au réseau local pour transmettre lesdits identifiants de réseau mobile terrestre public et les identifiants d'élément de réseau liés auxdits identifiants de réseau mobile terrestre public, et
l'équipement terminal est configuré pour recevoir lesdits identifiants de réseau mobile terrestre public et les identifiants d'élément de réseau liés auxdits identifiants de réseau mobile terrestre public du réseau local.

10. Équipement terminal selon la revendication 7, **caractérisé en ce que** l'équipement terminal est configuré pour mettre en place la connexion via le réseau local à un serveur d'authentification pour authentifier l'équipement terminal en tant qu'une condition préalable de fourniture de services de transmission de données via le réseau local en réponse à la réussite de l'authentification de l'équipement terminal.

11. Équipement terminal selon la revendication 7, **caractérisé en ce que** l'équipement terminal est configuré pour vérifier des identifiants de réseau mobile terrestre public dans une liste stockée dans un module d'identification de l'abonné par ordre de priorité,
l'équipement terminal est configuré pour comparer les identifiants dans la liste aux identifiants de réseau mobile terrestre public reçus du réseau local par ordre de priorité, et
l'équipement terminal est configuré pour sélectionner un réseau mobile terrestre public, dont l'identifiant se trouve également dans les identifiants de réseau mobile terrestre public reçus du réseau local.

12. Équipement terminal selon la revendication 11, **caractérisé en ce que** le module d'identification de l'abonné comporte une première liste d'identifiants de réseau mobile terrestre public contrôlée par un utilisateur et une seconde liste d'identifiants de réseau mobile terrestre public contrôlée par un opérateur, et
l'équipement terminal est configuré pour vérifier les identifiants de la première liste avant de vérifier les identifiants de la seconde liste.

13. Équipement terminal selon la revendication 7, **caractérisé en ce que** les identifiants de réseau mobile terrestre public dans une mémoire de, ou connectée à, l'équipement terminal sont complétés par un identifiant indiquant une technologie d'accès.

14. Équipement terminal selon la revendication 7, **caractérisé en ce que** l'équipement terminal est configuré pour transmettre un message dont l'identifiant d'accès au réseau comporte le nom de domaine d'un serveur d'authentification du réseau mobile terrestre public sélectionné en tant qu'une section de domaine.

15. Produit programme informatique comportant des moyens de code pour mettre en oeuvre les étapes consistant à : sélectionner (301) un réseau mobile terrestre public sur la base d'une comparaison entre des identifiants de réseau mobile terrestre public reçus et des identifiants de réseau mobile terrestre public contenus dans une station mobile, **caractérisé par** l'étape consistant à inviter la station mobile à mettre en place (204) une connexion via un réseau local sans fil à un élément de réseau défini par un identifiant d'élément de réseau, qui est lié à un identifiant du réseau mobile terrestre public sélectionné.

16. Produit programme informatique selon la revendication 15, **caractérisé en ce qu'**il comporte une partie de code programme informatique pour inviter la station mobile à transmettre un message dont l'accès au réseau comporte le nom de domaine d'un serveur d'authentification du réseau mobile terrestre public sélectionné en tant qu'une section de domaine.

17. Élément de réseau pour un réseau local sans fil, **caractérisé en ce que** l'élément de réseau est configuré pour stocker (201) des identifiants de réseau mobile terrestre public et des identifiants d'élément de réseau liés auxdits identifiants de réseau mobile terrestre public, et
l'élément de réseau est configuré pour transmettre (202) lesdits identifiants de réseau mobile terrestre public et les identifiants d'élément de réseau liés à ces derniers à l'équipement terminal, et
l'élément de réseau est configuré pour fournir (204), à l'équipement terminal, un accès via le réseau local sans fil à un élément de réseau identifié par un identifiant d'élément de réseau, qui est lié à un identifiant d'un réseau mobile terrestre public choisi par l'équipement terminal sur la base desdits identifiants transmis de réseau mobile terrestre public et des identifiants d'élément de réseau liés auxdits identifiants de réseau mobile terrestre public.

18. Élément de réseau selon la revendication 17, **caractérisé en ce que** l'élément de réseau est configuré pour fonctionner en tant qu'un authentificateur pour un protocole d'authentification extensible appliqué pour l'équipement terminal.

19. Élément de réseau selon la revendication 17, **caractérisé en ce que** l'élément de réseau est configuré pour transmettre (307) un message de protocole d'authentification extensible à un serveur d'authentifcation dans un réseau mobile terrestre public sur la base d'un message de demande ou de réponse de protocole d'authentification extensible provenant de l'équipement terminal,
l'élément de réseau est configuré pour transmettre (312) une demande d'authentification du serveur d'authentifcation à l'équipement terminal,
l'élément de réseau est configuré pour transmettre (317) une réponse d'authentification de l'équipement terminal au serveur d'authentification,
l'élément de réseau est configuré pour recevoir (319) des informations sur le succès de l'authentification en provenance du serveur d'authentification, et
l'élément de réseau est configuré pour permettre (312) à des services de transmission de données d'être fournis à l'équipement terminal dans le réseau local sans fil en réponse à des informations du serveur d'authentification indiquant la réussite de l'authentification.

20. Élément de réseau selon la revendication 17, **caractérisé en ce qu'**une transmission de données entre le réseau local et le réseau mobile terrestre public est basée sur le protocole Internet et **en ce que** l'élément de réseau est configuré pour fournir une transmission de données entre l'équipement terminal et l'élément de réseau du réseau mobile terrestre public sélectionné sur la base de messages dont les identifiants d'accès au réseau comportent le nom de domaine d'un serveur d'authentification du réseau mobile terrestre public sélectionné en tant qu'une section de domaine.

21. Procédé pour agencer une itinérance dans système de télécommunication comportant au moins un réseau local sans fil, au moins un réseau mobile terrestre public, et au moins un équipement terminal sans fil comportant des moyens pour mettre en place une connexion de transmission de données au moins avec le réseau local, le procédé comportant les étapes consistant à : sélectionner (203) un réseau mobile terrestre public par le biais d'une comparaison entre des identifiants de réseau mobile terrestre public reçus et des identifiants de réseau mobile terrestre public contenus dans l'équipement terminal, **caractérisé en ce que** le procédé comporte en outre les étapes consistant à :
recevoir (202), par l'équipement terminal, du système de télécommunication, lesdits identifiants de réseau mobile terrestre public et les identifiants d'élément de réseau liés à ces derniers, et
mettre en place (204) une connexion via le réseau local sans fil à un élément de réseau défini par l'identifiant d'élément de réseau, qui est lié à l'identifiant du réseau mobile terrestre public choisi par l'équipement terminal.

22. Procédé selon la revendication 21, **caractérisé en ce que**
une transmission de données entre le réseau local et le réseau mobile terrestre public est basée sur le protocole Internet, dans lequel
des données entre l'équipement terminal et l'élément de réseau du réseau mobile terrestre public sélectionné sont transmises au moyen de messages dont les identifiants d'accès au réseau comportent le nom de domaine du serveur d'authentification du réseau mobile terrestre public sélectionné en tant qu'une section de domaine.

23. Procédé selon la revendication 21, **caractérisé par** les étapes consistant à stocker, dans le module d'identification de l'abonné contenu dans l'équipement terminal, au moins une liste comportant les identifiants de réseau mobile terrestre public par ordre de priorité,
comparer, dans l'équipement terminal, les identifiants sur la liste aux identifiants de réseau mobile terrestre public reçus du réseau local par ordre de priorité, et
sélectionner (301) un réseau mobile terrestre public dont l'identifiant se trouve également dans les identifiants de réseau mobile terrestre public reçus du réseau local.
